(19) Europäisches Patentamt
European Patent Office
Office européen des brevets

(11) **EP 1 942 652 A1**

(12) **EUROPEAN PATENT APPLICATION**
published in accordance with Art. 153(4) EPC

(43) Date of publication:
**09.07.2008 Bulletin 2008/28**

(51) Int Cl.:
**H04N 1/387** (2006.01)

(21) Application number: **05799309.9**

(22) Date of filing: **25.10.2005**

(86) International application number:
**PCT/JP2005/019566**

(87) International publication number:
**WO 2007/049333 (03.05.2007 Gazette 2007/18)**

(84) Designated Contracting States:
**DE FR GB**

(71) Applicant: **Fujitsu Ltd.**
**Kawasaki-shi, Kanagawa 211-8588 (JP)**

(72) Inventors:
• **MASUI, Motoo**
**Kawasaki-shi**
**Kanagawa 211-8588 (JP)**

• **ANAN, Taizo**
**Kawasaki-shi**
**Kanagawa 211-8588 (JP)**

(74) Representative: **HOFFMANN EITLE**
**Patent- und Rechtsanwälte**
**Arabellastraße 4**
**D-81925 München (DE)**

(54) **BACKGROUND WOVEN PATTERN IMAGE CREATING METHOD**

(57) A block where basic units of a background pattern are arranged two-dimensionally is formed so as to stably read buried information from a printed background pattern. Binary or multivalued number is assigned to the block to express information. When a binary number (bit) is assigned to a block made up of background patterns in double size, error correction can be made if an error occurs only in one background pattern while reading the block. In each background pattern, a diagonal lacking its center part is drawn, and isolated dots are placed along the other diagonal. With this, while ensuring the stability of reading the buried information after the read by a scanner, the uniformness of appearance of the printed object can be ensured.

F I G. 4 A

**(Cont. next page)**

EP 1 942 652 A1

F I G. 4 B

## Description

## Technical Field

The present invention relates to the technology of preventing and suppressing the illegal copy of a document by assigning a background pattern image including a latent image area to a document to be printed, and more specifically to a method of generating a latent image and a background pattern suitable for detection by a scanner device for watermark information embedded in a background pattern area.

## Background Art

A latent image printing technique embeds uniform background patterns in appearance in the background area of a printed document, and specifies a latent image pattern not to be copied in a part of the area of the background pattern when it is copied by a copying machine, thereby suppressing an illegal copy.

An example of the above-mentioned latent image printing technique is described in the patent document 1. The patent document 1 utilizes different processing methods by a copying machine between isolated dots and adjacent dots with specific resolution, and uses a background pattern by configuring isolated dots for a drawing pattern in a latent image area, and configuring adjacent dots for a background pattern area (non-latent image area). By adjusting the average density of the patterns for substantially uniform appearance, it establishes latent image printing (or soft-thin paper printing) that only latent image patterns in the latent image area can not copied when a copying machine makes a copy.

As a similar latent image printing technique, the patent document 2 represents a latent image area and a background pattern area by dots in different sizes. In the latent image area, small dots as the isolated dots are used. In the background pattern area, large dots as adjacent dots are used. The spaces between dots are adjusted in each area to obtain substantially uniform average density, thereby guaranteeing uniform appearance as a result of a printing process.

A copying effect during latent image printing can be obtained by losing the isolated dots in the latent image portion in the copying process when both of the latent image pattern and the background pattern are drawn as a printing bit map at the resolution of 600 dpi, printed at specified resolution, and copied by a copying machine. The principle of latent image printing depends on the process method on fine dots in the copying machine, and the effect depends on the type of copying machine. The principle is presented by the patent document 6 and utilized by the patent documents 1 and 2.

Described next in addition to the latent image printing technique is the background pattern watermark technology for embedding watermark data in the background pattern image by combining a plurality of background patterns and configuring a background pattern image of a document.

As a system of realizing a background pattern watermark, the patent document 3 uses a dot pattern in a predetermined size, and realizes embedding watermark information in a background pattern image having uniform density by shifting the positions of a part of dots in a pattern such that waves having a propagation direction set depending on each bit of the watermark information can be embedded in a pattern according to the pattern in which each dot is uniformly arranged. The system of the patent document 3 is based on using a dot pattern of a predetermined size, and is not intended for latent image printing.

In addition to the latent image printing, a system of realizing embedding watermark information uses two types of background patterns corresponding to "0" and "1" in the above-mentioned patent document 1 to represent watermark information. Based on the system, the patent document 4 embeds a copy protect code of the copying machine in the background pattern area similarly in the latent image printing. Furthermore, in the patent document 5, a background pattern is configured in block units, thereby adding a condition code for allowing a copying machine to make a copy by a combination of background pattern in addition to a copy protect code in a copying machine.

In addition to the latent image printing, the above-mentioned patent document discloses another system that realizes embedding watermark information, and determines the drawing positions of small dots and large dots in the latent image area and background area with reference to a bit value of the corresponding watermark information. However, when detection is performed from a copied object, it is necessary to embed watermark information in the drawing position of large dots. When information is image data in the large dots, the shift of a position is relatively apparent, and causes the problem of lack of uniformity as a printed object.

First, in the method of the above-mentioned patent document 5, when a bit value of watermark information is assigned to a plurality of background patterns, a bit pattern of the watermark information is embedded in a two-dimensional array in a predetermined area of a background pattern image, and the embedded watermark information is detected, the noise made when a scanner device reads data or spot on a sheet of paper can reduce the detection precision of a background pattern with respect to the bit pattern of the watermark information.

In the above-mentioned patent document 5, a bit pattern is repeatedly embedded in the background pattern area, and repeatedly detected when it is detected, thereby improving the precision. To realize stable detection in this method, it is necessary to repeatedly arrange a watermark embedding block configured by a bit pattern in a character area of a printed document and in a position not overlapping a latent image area. However, when there is a small margin area in a printed document, the watermark information cannot be successfully embedded or detected. Therefore, it is desired to embed watermark information in a smaller area.

Second, in the system of generating a background pattern watermark image with a latent image in the above-mentioned patent documents 1, 4, and 5, a latent image pattern and a background pattern are configured with resolution higher than in the normal printing, and a high-precision background pattern watermark image is to be generated to perform latent image printing using the functions of a copying machine. Practically, if a background pattern image is configured with the resolution of 600 dpi capable of latent image printing, then the latent image printing can be performed with the same resolution.

However, reading an image with 600 dpi using a document scanner device requires about four times longer time than reading an image with 300 dpi. Therefore, it is not practical when a large volume of data is to be scanned from a document. In addition, to stably detect watermark information, it is necessary to scan a printed or copied document using a multivalued system. Especially when an image is read with 600 dpi, accumulating and storing scanned images for reading a watermark requires a larger storage capacity.

Therefore, it is practically desired to set the resolution of a document scanner device for watermark detection as the resolution different from and lower than the resolution at printing.

Third, it is assumed that an image with a latent image in the above-mentioned patent document 1 is configured such that substantially the same number of dots as the dot pattern for a background pattern are arranged at random in the pattern in light of the restriction that substantially the same density as the average density of the background pattern portion is set for an isolated dot pattern for a latent image.

However, when isolated dots are configured based on the patent document 1, it is hard for some manual operations to configure a latent image pattern with isolated dots uniformly arranged with a required number of dots. Therefore, to avoid the occurrence of uneven color area of a latent image during printing or copying, it is necessary to generate a background pattern image with a latent image including a latent image pattern, perform a trial printing process to confirm the printed color of the latent image, and make a readjustment as necessary.

When a copied watermark is detected in the system of the background pattern watermark with a latent image in which a latent image effect is obtained by a combination of small dots and large dots as described in the patent document 2 above, it is necessary to embed a watermark in the large dots that do not disappear as a result of a copying process.

It is necessary to set the amount of change in position of large dots by embedding a watermark with the scanning with low resolution taken into account because the large dots are more visible than small dots for latent images. Therefore, the patent document 2 has the disadvantage that uneven appearance occurs in an area configured by large dots when a watermark is embedded, and apparent uniformity is degraded.

Patent Document 1: Japanese Published Patent Application No. 2001-346032
Patent Document 2: Japanese Published Patent Application No. 2004-223854
Patent Document 3: Japanese Published Patent Application No. 2003-101762 (Japanese Patent No. 3628312)
Patent Document 4: Japanese Published Patent Application No. 2002-305646
Patent Document 5: Japanese Published Patent Application No. 2003-283790
Patent Document 6: Japanese Published Patent Application No. H7-231384

**Disclosure of the Invention**

The object of the present invention is to provide a background pattern image generating method capable of stably reading information even after making a copy by a copying machine.

The background pattern image generating method according to the present invention generates a background pattern by printing a dot pattern on a background area of a printed document. The method includes: preparing two types of background patterns, associating a block of a plurality of coupled two types of background patterns with a binary or multivalued number representing information by combining the two types of background patterns; and generating a background pattern image by arranging a block associated with the binary or multivalued number according to the watermark information included in the background pattern.

The background pattern according to the present invention is a basic unit of a background assigned to the background pattern area of a document to be printed, and includes a line configured by adjacent dots for detection of watermark information embedded in the background, and also includes isolated dots that are not copied during copying.

**Brief Description of the Drawings**

FIG. 1 shows a print image of a document including a latent image pattern;
FIGs. 2A and 2B show an example of the configuration of a background pattern according to an embodiment of the present invention;
FIG. 3 shows an example of the configuration of the latent image pattern according to an embodiment of the present invention;

FIGs. 4A and 4B show a method of embedding watermark information according to an embodiment of the present invention;

FIG. 5 is a view (1) showing the method of performing an error correction;

FIGs. 6A and 6B are views (2) showing the method of performing an error correction;

FIG. 7 shows an example of embedding a watermark;

FIG. 8 shows the procedure of generating a printing background image;

FIG. 9 shows an example of a block delimiter pattern;

FIGs. 10A through 10D show a change of a pattern when reading by a scanner is performed;

FIG. 11 is a view (1) explaining a method of generating a dot pattern for a latent image;

FIGs. 12A and 12B are views (2) explaining a method of generating a dot pattern for a latent image;

FIG. 13 is an explanatory view of the procedure of designing a dot pattern of a background pattern proposed according to an embodiment of the present invention.

**Best Mode for Carrying Out the Invention**

To solve the above-mentioned problems detected in the image generating system according to the above-mentioned patent documents 1, 4, and 5, an embodiment of the present invention shows a method of generating a background pattern watermark image with a newly proposed latent image from the following three points of views:

(1) A watermark is to be embedded with the improvement of the efficiency and the detection stability ensured;
(2) With respect to a background pattern, the apparent uniformity after printing is to be improved and a watermark is to be appropriately detected after copying and scanning processes; and
(3) A latent image pattern is to be set such that the density is uniform at printing and copying.

Relating to the first viewpoint, when watermark information is embedded, a background pattern corresponding to a binary is arranged as an n by m matrix in a constant multiple size (hereinafter referred to as a background pattern in a length by width multiple size), and the pattern is embedded as multivalued bit information obtained by adding the redundancy to the bit value of the watermark information. Thus, an error correction can be made, and the watermark information can be embedded to the background pattern with both the efficiency in embedding the watermark and the detection stability ensured.

With respect to the first viewpoint, when the watermark information is embedded in a background pattern image area with latent images, a dedicated area specific background pattern is used to designate the area in which the watermark information is embedded for the background pattern at a leading position in the embedded portion of the watermark information. By embedding a specific background pattern at the leading position of the embedding area of the watermark information in a unit of the background pattern in an n by m multiple size configured in an n by m unit, the starting position and the ending position of the watermark detection area can be correctly detected.

With respect to the second viewpoint, when a watermark image is generated, the background pattern is generated and simultaneously an appropriate watermark detection rule is generated in advance for use during the scanning with lower resolution so that the watermark can be stably detected although a scanning device performs the scanning with the lower resolution on a document with a latent image printed with, for example, 600 dpi. By performing the process of estimating and validating the detection performance in advance, the watermark can be stably detected based on the statistical pattern detection.

With respect to the third viewpoint, a method of determining how isolated dots are uniformly arranged is provided with the condition of suppressing uneven color of latent image pattern during both printing and copying. In this method, a latent image pattern with appropriate density can be generated for the background pattern to be used in embedding a watermark.

In the embodiment of the present invention, latent image printing is realized based on the combination of a latent image pattern and a background pattern in the system similar to the above-mentioned patent documents 1, 4, and 5.

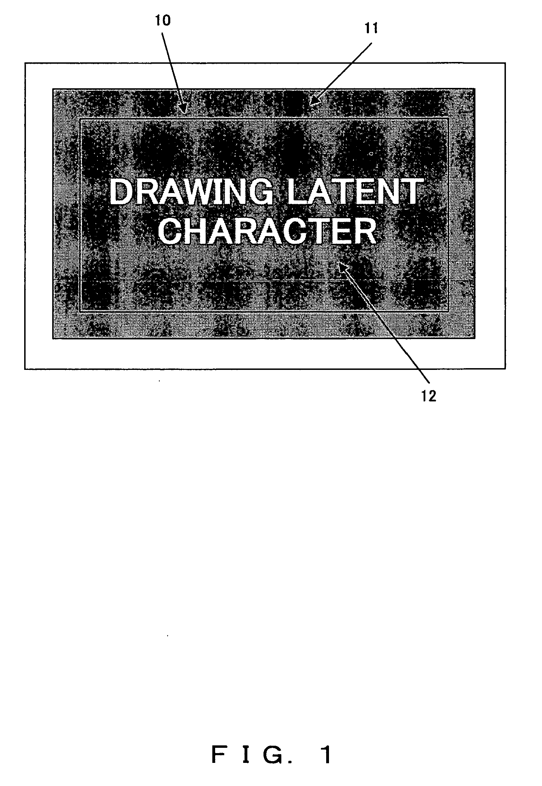

FIG. 1 shows a print image of a document including a latent image pattern.

In the document, a background pattern area 11 is printed with predetermined background patterns on the surrounding area. Inside the area, an area in which document text is drawn is provided. The area 10 in which the document text is drawn is also an area 12 in which a latent image is embedded. A latent image pattern is formed by changing the background pattern in a predetermined method.

For example, a latent image pattern by isolated dots and a background pattern configured by adjacent dots are used. A latent image pattern formed by isolated dots is drawn in the latent image area 12 in the background area of the document. In addition, combinations of background patterns configured by adjacent dots are drawn in the background pattern area 11.

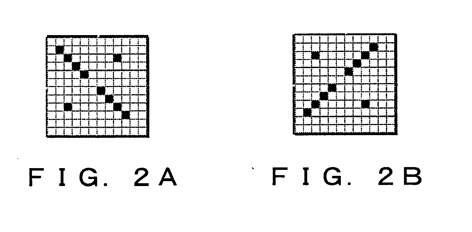

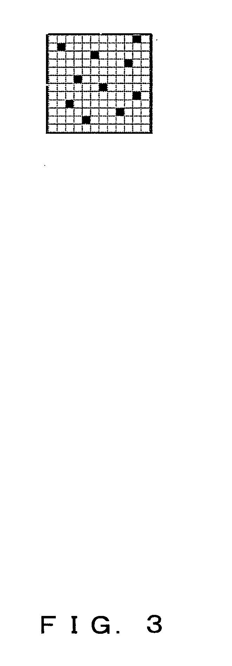

FIGs. 2A and 2B show an example of the configuration of a background pattern according to an embodiment of the present invention. FIG. 3 shows an example of the configuration of a latent image pattern according to an embodiment of the present invention.

In these patterns, the pixel size is represented by 12 by 12 pixels, and the number of dots configuring the background pattern is 10 dots. In the background patterns shown in FIGs . 2A and 2B, the bit "0" corresponds to one of them, and the bit "1" corresponds to the other, thereby representing information. In FIGs. 2A and 2B, each pattern includes a diagonal in the diagonal direction separated at the center and isolated dots in the other diagonal direction.

In the present embodiment, the background pattern and the latent image pattern are configured as a bit map having equal length and width so that the background pattern successfully adapts to the latent image pattern. When a latent image is drawn, and if a part of the background pattern can be overwritten by the latent image pattern at the boundary portion of the background pattern area 11 and the latent image area 12, it is not necessary to limit the background pattern and the latent image pattern specifically to the same size.

Described next is the embedding area (latent image area 12) for a watermark according to the embodiment of the present invention.

In the embodiment of the present invention, watermark information is detected from the data read from both a printed object and a copied object by the scanner device. When an isolated dot pattern (latent image pattern shown in FIG. 3) is used such that the latent image area 12 cannot copied during copying, watermark information is to be assigned to the background area 11 in which the pattern does not disappear during copying. On the other hand, when the background area 11 is not to be copied during copying and the latent image character 12 is to be left as is, the isolated dot pattern (latent image pattern shown in FIG. 3) is assigned to the background area 11, and the background pattern (background pattern shown in FIGs. 2A and 2B) configured by a adjacent dot pattern is assigned to the latent image character area 12. In the present embodiment, the watermark information is regularly embedded in the background pattern of the background area 11 as described below.

In the above-mentioned patent document 1, two types of background patterns can be represented as follows. For example, two diagonal lines "/" and "\" are associated respectively with "0" and "1", and the two patterns are repeatedly arranged in the block of a predetermined size, thereby representing a bit pattern of the watermark information in a two-dimensional array in a predetermined area of the block.

On the other hand, in the embodiment of the present invention, a unique isolated dot pattern (FIG. 3) and a plurality of adjacent dot pattern (FIGs. 2A, 2B) are generated and used for visibility during printing and an appropriate shape of the background pattern in reading by a scanner with lower resolution in the copying process by a copying machine.

Described below are the advantages of the background pattern according to an embodiment of the present invention in comparison with the above-mentioned patent document 1.

In the background pattern (FIGs. 2A, 2B) configured according to the embodiment of the present invention, the apparent uniformity between the two patterns is improved as compared with the "\" and "/" of the patent document 1, and the arrangement of the same patterns can be recognized from a distance. Therefore, the latent image character drawn in the patterns cannot be relatively easily found. That is, since isolated dots are assigned in the diagonal direction, the effect of the appearance of a square grid pattern can be acquired, the apparent uniformity increases, and the precision in position detection of necessary background patterns in detecting watermark information can be attained.

When the background pattern (FIGs. 2A and 2B) is copied by a copying machine, the adjacent dot pattern is deleted, and changes into simple patterns of "\" and "/". Therefore, the watermark can be detected as easily as the patent document 1. When small dots are assigned to the length-by-width pattern formed by "-" and "|", and the background pattern of "÷" and "*|*" is configured, the same effect can be obtained.

In addition, when a printed object using the background pattern (FIGs. 2A and 2B) assigned isolated dots is read directly by a scanner, the resolution during printing can be estimated if the change pattern of the isolated dot portion is confirmed. For example, if the isolated dot portion is 1 dot with 600 dpi, a read by a scanner device cannot necessarily erase the dot. However, as compares with a 1-dot printing with 300 dpi, the 1-dot printing with 600 dpi is low in density per unit area. Therefore, the average density of the area is lower regardless of the processing system of the scanner device. As a result, if a low-density area that does not appear in the reducing process such as pixel averaging appears by a scanner device reading data using an original binary image as input, it can be determined that the resolution during printing is higher than the resolution of the scanner.

When the latent image portion 12 is to be kept by copying, the isolated dot pattern (FIG. 3) is used as the background portion 11, and the background pattern (FIGs. 2A, 2B) configured by adjacent dots is used as the latent character area 12, thereby embedding watermark information. However, to embed the watermark information in the latent character area 12, it is necessary to draw a latent character in a large font size so that the latent character can sufficiently include the block size in which the watermark information is to be embedded. Generally, it is assumed that the watermark information is to be embedded together with the background pattern in the background area 11. Therefore, a method of embedding background pattern watermark information in the background area is described below.

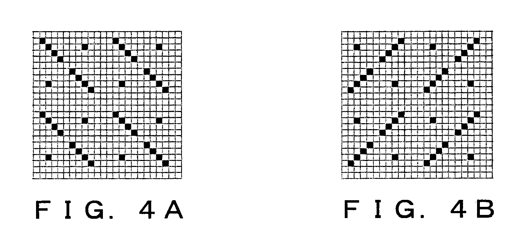

FIGs. 4A and 4B show a method of embedding watermark information according to an embodiment of the present invention.

In the embodiment of embedding watermark information according to the present invention, a total of four (2 by 2 as length by width) patterns as the two types of background patterns assigned to the binary number of "0" and "1" are arranged as a background pattern in double size (FIGs. 4A, 4B) to be used in embedding a watermark. To be more general, a background pattern in a length by width multiple size obtained by arranging a total of m in width by n in length can be used. These background patterns in intermediate sizes are hereinafter referred to, for example when 2 x 2 patterns are used, as a "background pattern in double size" for convenience.

By embedding watermark information using as a unit the background pattern in double size (T14, T15) in which, for example, four background patterns are arranged in square form as described above, the redundancy in embedding a bit can be freely controlled. For example, when two patterns in each of the upper and lower rows are "0" in FIG. 2A and "1" in FIG. 2B, the following arrangements permit 1 bit of
"00;00" ⟹ 0 (FIG. 4A)
"11;11" ⟹ 1 (FIG. 4B)
watermark information for four background patterns, and the remaining 3 bits are used to improve the stability of reading characters. That is, the combination of four "0s" and "1s" can represent only "0" and "1", thereby successfully making an error correction.

For example, when the thus generated pattern is read, all of four background patterns in double size (FIGs. 4A, 4B) are to indicate the same values. However, there can be the possibility that a part of bits are unclear due to the noise occurring during scanning. Therefore, relating to the detection result of all of the four background patterns configuring the background pattern in double size, a robust watermark detection can be easily realized based on, for example, majority rule.

In addition, when the above-mentioned background pattern in double size is used, to each of the sequences of two patterns
in each of the upper and lower rows,
"00;00" ⟹ 0
"11;11" ⟹ 1
"01;01" ⟹ 2
"10;10" ⟹ 3
"00;11" ⟹ 4
"11;00" ⟹ 5
"10;01" ⟹ 6
"01;10" ⟹ 7
a pattern having equal numbers of 0 and 1 are added, and octal watermark information can be assigned. For example, in this case, one bit of error detection bits can be assigned to the 3-bit watermark information. Practically, the watermark information to be embedded is converted into an octal number, and the watermark information is assigned in an octal (3-bit) unit, thereby realizing relatively robust detection for subtle noise as compared with the case of a binary number while embedding the watermark information in a narrower background pattern area.

For example, when 0 represents "\" (background pattern shown in FIG. 2A), and 1 represents "/" (background pattern shown in FIG. 2B), an octal embedding pattern is represented in the following form as a total of eight types of background patterns in double size.

```
0:\ \
  \ \
1:/ /
  //
2:\ /
  \ /
3:/ \
  /\
4:\ \
  / /
5:/ /
  \ \
6:/ \
  \ /
7:\ /
  / \
```

Thus, for example, by setting the background pattern (FIGs. 4A, 4B) in double size formed by four background patterns as an embedding unit for a watermark, the stability of detection and the efficiency of an embedding process can be well balanced in embedding watermark information.

In the present embodiment, four background patterns (FIGs. 2A, 2B) are arranged in square form, but in embedding watermark information, there is no limit to the number of background patterns used as an embedding unit of watermark information. For example, watermark information can be embedded using a total of 8 (4 by 2 in length and width) patterns, or a total of 16 (4 by 4 in length and width) patterns. Thus, assuming that the intermediate pattern obtained by arranging a plurality of background patterns is defined as a watermark embedding unit, the precision in the majority rule can be improved during watermark detection, or the number of error correction bits can be increased.

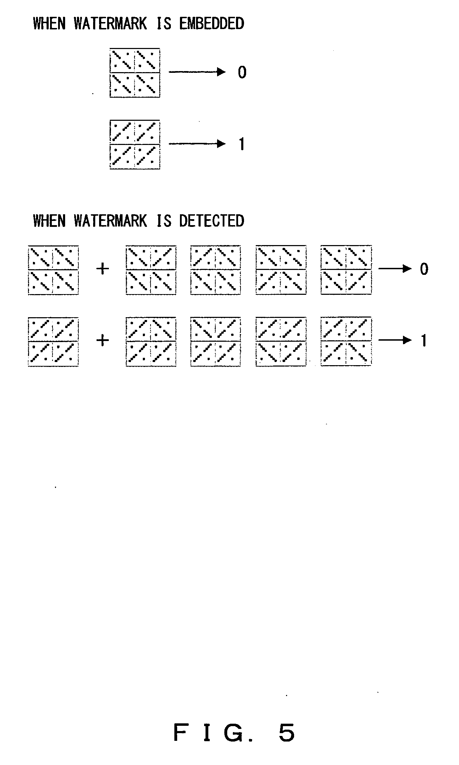

FIGs. 5 through 6B show how to make an error correction.

As shown in FIG. 5, a 1-bit watermark is represented by m by n (for example, 2 by 2) arranged watermark patterns. In the m by n patterns configuring the watermark bit, less than half (= (m x n)/2-1 or less) inverted watermark patterns are allowed as 0 and 1 bits during detection. Thus, local noise by fine stains on paper etc. can be reduced.

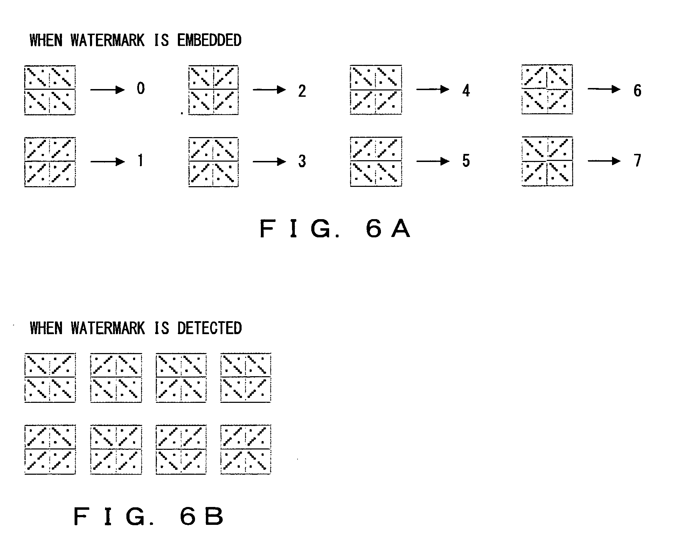

In addition, as shown in FIGs. 6A and 6B, watermark information is represented by multi-level value using the same patterns or two types of patterns. If there are more than a predetermined number of patterns 2 through 7 shown in FIG. 6A, it is determined that multivalued embedding is performed. Thus, if an erroneous detection determination pattern (error correction pattern described above) appears at or higher than a predetermined frequency when the multivalued embedding is performed, then it is determined that the detection accuracy is not accepted. That is, the pattern shown in FIG. 6B is used as an error correction pattern.

Next, assume that the patterns are arranged in a predetermined two-dimensional space area.

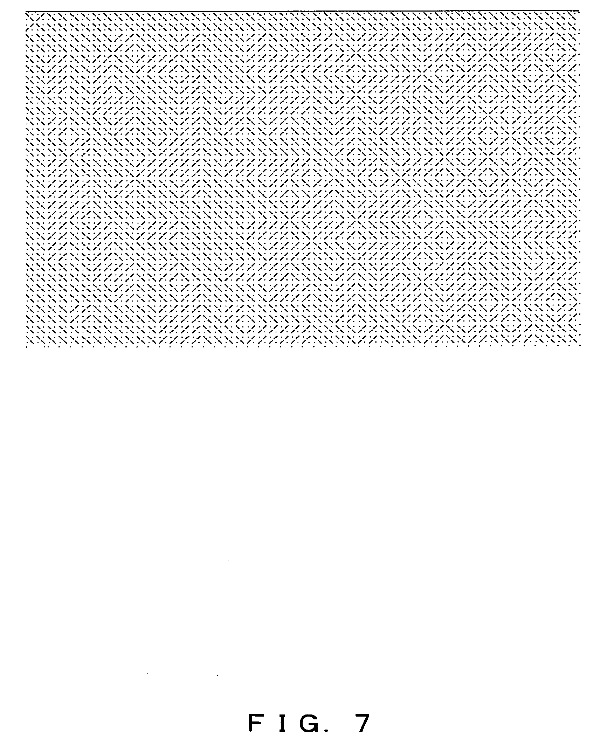

FIG. 7 shows an example of embedding a watermark.

For example, when binary 400-bit information is embedded in binary as a unit of embedding a watermark, the patterns are arranged in a 20 by 20 square block depending on the contents of the bit value using the background patterns in double size (FIGs. 4A, 4B) corresponding to "0" and "1". FIG. 7 shows an example of a configuration of a 25 by 16 block.

To embed 400-bit information in octal (3 bits) per unit block, at least 134 background patterns in double size are required. In this case, the size of the block in which a watermark is embedded can be reduced to the 15 by 9 patterns in octal as compared with the 25 by 16 patterns by binary.

If the background pattern is configured by 12 by 12 pixels, the background pattern in double size is configured by 24 by 24 pixels. Therefore, when 400 bits are embedded in binary, 600 by 384 pixels are required for a block (FIG. 7). On the other hand, when 400 bits are embedded in octal, 360 by 216 pixels are required for a block.

The information above relates to the pixel size during printing with 600 dpi, and when the same background pattern image data is read by a scanner with 300 dpi, the background pattern can be reduced to 6 by 6 pixels, and the background pattern in double size can be reduced to 12 by 12 pixels. The watermark embedding size is 300 by 162 when the embedding is performed in binary, and 180 by 108 pixels in octal.

Thus, for example, when 400-bit watermark information is embedded, 400 background patterns in double size are arranged, and the area in which 400-bit watermark information is hereinafter referred to as a watermark embedded block.

As a method of arranging such a watermark embedded block in a document printing bit map, for example, a watermark embedded block in which information is embedded can be arranged in the background area. For example, in a watermark embedded block in which 25 by 16 background pattern in double size are arranged, 100 blocks (10 in length by 10 in width) can be arranged.

In addition to the watermark embedding in the background pattern image, the method of simultaneously realizing drawing a latent character can be a method described in the patent document 1.

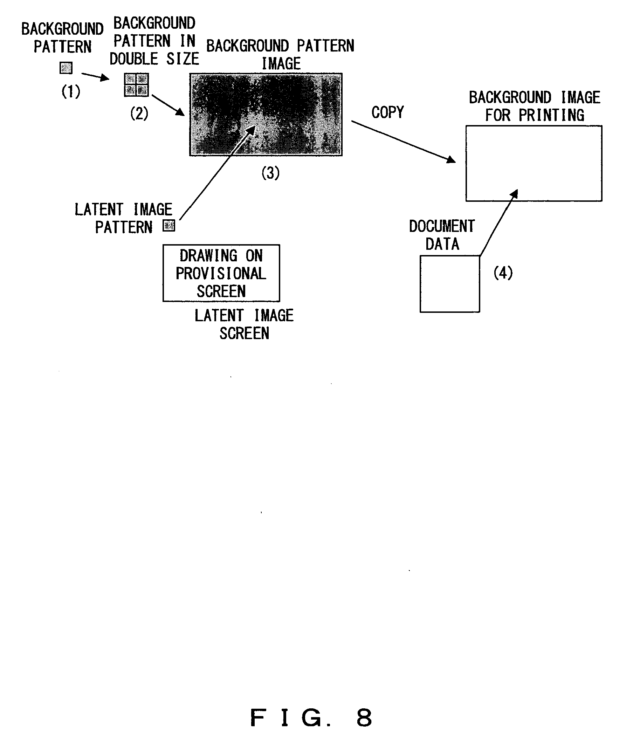

FIG. 8 shows the procedure of generating a background image for printing.

Practically, a background pattern is generated (FIG. 8 (1)) and copied to generate a background pattern in double size (FIG. 8 (2)), and a latent image pattern is overwritten (FIG. 8 (3)) in following operations (A) and (B).

(A) The contents of a latent character are drawn by black characters on a binary bit map using a specified font.

(B) Each pixel on the binary bit map is referred to, and when a pixel is a black dot of a latent character, a latent image pattern prepared in the above-mentioned method in advance is drawn in a corresponding position by regarding the binary bit map for a latent image as enlarged to the resolution of the background pattern image.

The operation of (B) above is easily realized by performing the block transfer process of the bit map in the overwrite mode. For example, when the GDI function of Win32API of Microsoft (registered trademark) is used, when

BitBlt (copy destination, X coordinate of the copy destination, Y coordinate of the copy destination, width of the transfer range, length of the transfer range, copy source, X coordinate of the copy source, Y coordinate of copy source, transfer mode), the transfer mode is set as SRCCOPY.

Using the thus generated background pattern image with a latent image as a background image of a practical printed document, printing can be performed with a latent image and background pattern watermark embedded (FIG. 8 (4)).

This operation can also be realized by using the GDI function of Win32API. However, in this case, each pixel of a binary image can be superposed in the OR arithmetic mode, not in the overwrite mode. Practically, a printed document is drawn on the output screen, and using the above-mentioned BitBlt function, a background pattern image with a latent image is composed. Otherwise, a document to be printed is drawn on the binary bit map, a background pattern image with a latent image is drawn on the output screen in advance, and a binary bit map generated from the printed document can be superposed on the image. Thus, if the transfer mode is set as SRCPAINT, then a result of performing the OR arithmetic on the pixels in the corresponding positions between the background pattern image and the printed document image is obtained (FIG. 8 (4)).

In the above-mentioned procedure, an output image of a background pattern watermark embedded document with a latent image can be generated on a binary bit map. Only when the bit map image is printed with specific resolution such as 600 dpi etc., a latent image effect (the latent image portion is not copied during copying) can be obtained. Therefore, it is desired that the resolution during printing is preset to the accompanying information to the bit map image. It is necessary for a printer to perform latent image printing without enlargement or reduction with reference to the specification of the resolution associated with the bit map image.

Described next is the procedure of detecting a watermark on a background pattern watermark embedded document with a latent image generated as described above.

The watermark detecting process according to the embodiment of the present invention is not intended for preventing an illegal copy on a copying machine or a composite machine, but is intended for reading a background pattern watermark embedded document with a latent image from a scanner or relatively low resolution connected to a PC terminal, and acquiring at a high speed the information for tracing the source of a document such as a personal ID of the person who prints a document on the PC. To attain the intention, it is necessary to correctly detect watermark information without losing the embedded information in an invisible state due to the transformation of a background pattern in the copying process on a copying machine or the reducing and reading process on a scanner.

In the embodiment according to the present invention as described above, for example, the background pattern in double size (FIGs. 4A, 4B) obtained by combining two types of background patterns (FIGs. 2A, 2B) in four units is used as the minimum unit in embedding watermark information. In an embodiment of the present invention, the background pattern in double size is used, but generally m by n background pattern arrangement shown in FIGs. 2A and 2B can be used.

To make a background pattern not to be easily identified by naked eyes, the pixel size of the background pattern (FIGs. 2A, 2B) is defined as a 12 by 12 pixel size according to an embodiment of the present invention, the resolution of 600 dpi is assumed and a background pattern image is prepared. In the scanned document data obtained by reading the above-mentioned image with 300 dpi, the background pattern is 6 by 6 pixels in size.

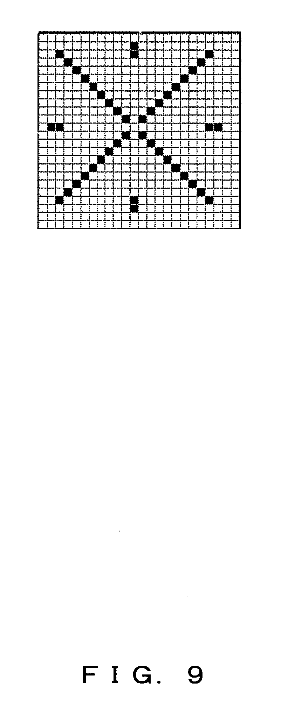

FIG. 9 shows an example of a block delimiter pattern.

According to the embodiment of the present invention, the watermark embedding unit is the background pattern in double size (FIGs. 4A, 4B) as described above. Therefore, if the delimitation position of a background pattern in double size as a unit of embedding a background pattern watermark is erroneously detected by the shift of the detection position during watermark detection, watermark information cannot be obtained.

To solve the problem, according to the embodiment of the present invention, a specific delimiter pattern (FIG. 9) having the same size as the background pattern in double size (FIGs. 4A, 4B) is prepared, and drawn at the leading position (upper left in FIG. 7) of the watermark embedded block as a unit of watermark embedding.

It is desired that the pattern is apparently similar in shape with the background pattern in double size as a combination of background patterns, and can be specifically identified in pattern. For example, when there are two types of background patterns "/" and "\", a pattern "x" (FIG. 9) of a background pattern in double size can be considered as a shape similar to the mark "x" configured by combining the two types. Practically, by determining the characteristic of the shape such as the continuity of the central dot of "x", the position of the watermark block in which arbitrary bit (for example, 64-bit) watermark information is embedded can be designated.

When a watermark embedded block (FIG. 7) is continuously arranged, and if the delimiter pattern (FIG. 9) is provided only for the starting position (upper left in FIG. 7) of each watermark embedded block (FIG. 7), then the watermark embedded block (FIG. 7) can be variable by designating the same delimiter pattern (FIG. 9) at the heading position of the blocks arranged up and down and right and left, and obtaining the distance (number of pixels) of the delimiter pattern of the adjacent block.

Similarly, although watermark information is embedded in only a part of a background pattern, watermark information in any size embedded at any position of a background pattern image can be detected by identifying the delimiter pattern (FIG. 9) below the delimiter pattern (lower left in FIG. 7), right in FIG. 7, and lower right in FIG. 7 in addition to the heading position (upper left in FIG. 7) of the watermark block.

In addition, although a reading by a scanner is considered in the embodiment of the present invention, the reading system of each scanner is different for different type of scanners, and a line distortion can more easily occurs in a reading operation in a roller scanner than in a flat head scanner. As described above, when embedding is performed using a background pattern in double size (FIGs. 4A, 4B), a fatal detection error occurs when there occurs a distortion during a reading by a scanner on half or more sides of the background pattern (FIGs. 2A, 2B).

With the above-mentioned problems, the embodiment according to the present invention provides a delimiter (FIG. 9) explicitly indicating the embedding position of the watermark embedded block (FIG. 7), and based on the delimiter, the positions of all background patterns in double size (FIGs. 4A, 4B) configuring the watermark block are assumed. When a background pattern is detected, the range of the shifts of several pixels is searched based on the background pattern in double size (FIGs. 4A, 4B). As a result, the bit value of the watermark information can be simultaneously detected while amending the subtle shifts of detection positions. As described above, when watermark information is embedded with the background pattern in double size (FIGs. 4A, 4B), the watermark information can be stably detected.

Described next is the characteristic of the arrangement of the dot pattern of the background pattern (FIGs. 2A, 2B) according to the embodiment of the present invention.

The pattern is configured according to an embodiment of the present invention such that a watermark can be stably detected although a copying machine makes a copy and a scanning process is performed with lower resolution on a document with a latent image printed with 600 dpi.

First, when a copying machine makes a copy on print paper in fine dots such as latent image printing as basic restrictions on background patterns, the process results are different between the read direction and the direction perpendicular to the read direction.

For example, the "-" mark and the "|" mark are the same marks different only in direction by 90°. However, it is not guaranteed that the results of the copying process are not always the same. Therefore, according to the embodiment of the present invention, to suppress the effect caused by rotating the direction during copying by 90°, a background pattern based on the diagonal lines similar to "/" and "\" is used. However, based on that the detection rule is used with each change of "-" and "|" during the copy by a copying machine.

When a result of printing is checked, the directions of diagonal lines of simple "/" and "\" are easily recognized in a pattern, and the difference from the latent image part can be relatively clearly recognized. Therefore, according to the embodiment of the present invention, small dots that disappear during copy are arranged in the positions orthogonal to the diagonal pattern so that apparent uniformity can be improved on printout (FIGs. 2A, 2B). Otherwise, "÷" and "*|*" (obtained by rotating "÷" by 90° in the counterclockwise direction) can be used as a background pattern having "-" and "|" as basis.

The background pattern (FIGs. 2A, 2B) shown in the present embodiment has an effect of gray scale of squares for each background pattern with the diagonal components of the background pattern during the printing on a printer. Based on the gray scale, the background pattern (FIGs. 2A, 2B) improves the visual uniformity as compared with the simple "\" and "/" patterns of the patent document 1. Furthermore, when printout is directly scanned to detect a watermark, the alignment of the background pattern in double size (FIGs. 4A, 4B) can be performed by detecting white grid state components with respect to the black background. Therefore, the background pattern (FIGs. 2A, 2B) provided with the small dots is more effective than the simple diagonal patterns "\" and "/".

Described below is the method of generating the above-mentioned background patterns.

When a watermark image with a latent image is generated, and a unique background pattern appropriate for a reading with low resolution is generated, it is considered that a change in pattern can be made in the procedure of

background pattern ⇒ change in shape by copy ⇒ reduction by scanning with low resolution

Therefore, an image for estimating the process of the changes is to be generated. For example, a noise removing process for deleting fine isolated dots is performed, and a reducing process depending on the resolution of a scanner is performed with a dot shift during a read considered and the condition is changed.

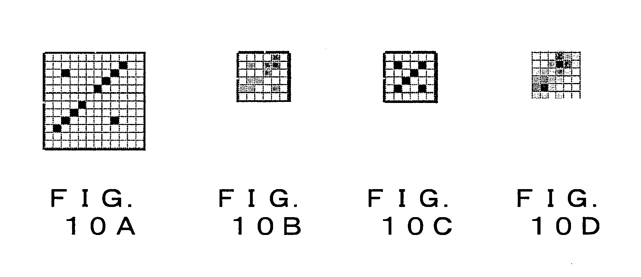

FIGs. 10A through 10D show a change in pattern during the reading by a scanner.

For example, In FIGs. 10A through 10D, the comparison between the result of performing the reducing process using the background pattern (FIG. 10A) according to the present embodiment (FIG. 10B shows the thinning process, and FIG. 10C shows the averaging process) and the result of the actual scanning result (FIG. 10D) are shown.

By visually confirming the image, it can be confirmed without the procedure of printing, copying, and scanning whether or not a generated background pattern is appropriate in a reading with a predetermined resolution.

During detection, the generated reduced image is reasonably used as a template for comparison. In addition, since the object to be compared in the embodiment of the present invention is a fine dot, it is also possible to determine the method of detecting a pattern based on a statistical rule. The determination of the method of detecting a pattern based on a statistical rule refers to, for example, in the above-mentioned method, set several mask patterns in an appropriate form for the reduced images generated as a simulation from one background pattern in the above-mentioned method (for example, FIG. 2B), and determine which mask pattern is valid by obtaining a brightness average on the pixel existing in each mask.

Described below is the method of generating the dot pattern of the latent image pattern (FIG. 3). The latent image pattern is configured by isolated dots such that each dot pattern is separated from each other by a predetermined space or more, and the latent image pattern indicates apparently the same density as the background pattern, and can be removed in the copying process.

If there is a bias in a pattern, uneven color occurs during both printing and copying. Relating to a latent image dot pattern, if the dot arrangement is not uniform, fine unevenness occurs in the latent image area during printing. As a result, the change in gray scale during copying is not uniform, but in an uneven pattern. Therefore, as a restriction condition, when the distance between dots in the latent image pattern is calculated by assuming that the dots are connected up and down and left and right, the dots are adjusted on the lattice such that the distance between two dots can be equal to or more than a predetermined threshold.

Relating to the arrangement of isolated dots, for example, a method of uniformly arranging a dot pattern using a spring model and assigning each dot to the closest lattice point can be applied.

Otherwise, based on that each dot is on the lattice, the dot arrangement on the lattice can be amended in the following procedure.

The outline of the algorithm is described below.

    (1) The shortest distance between the dots are obtained in all dots.

(2) The destination of a dot is searched for in the direction of extending the shortest distance.
When the distance between the destination of the corresponding dot and the position of the neighboring dot is within a predetermined distance, it is not an appropriate isolated dot for a latent image. Therefore, it is removed from destination candidates.
(3) The corresponding dot is moved such that the distance from the neighboring dot can be extended.
(4) If the shortest difference between a dot and another dot is substantially constant by repeating the operations on a movement result, the process terminates.

In the above-mentioned procedure, isolated dots can be substantially uniformly arranged.

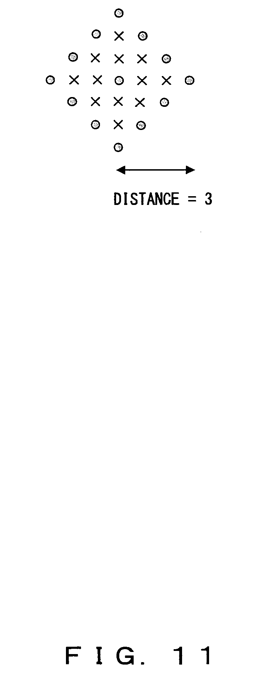

FIGS. 11 through 12B are explanatory views showing the method of generating a dot pattern for a latent image.

If the dot arrangement is manually performed, it is necessary and laborious to confirm by printing whether or not the arrangement is uniform. When the number of dots increases, it is difficult to manually determine the uniform arrangement. Therefore, under the following restriction conditions, an algorithm for automatically determining the dot arrangement by the number of specified dots is required.

-Restriction condition in determining the arrangement

1) Predetermined or higher value for the distance from a neighboring dot
2) A latent image dot is arranged with the distance to the dot on the adjacent pattern (repeating the same pattern) up and down, and right and left taken into account.

The algorithm of generating a latent image pattern when p dots are arranged on the latent image pattern of an m by n dot size is described with reference to FIGS. 11 through 12B. Step 1: The array of the m by n latent image pattern is prepared, and the first dot is placed in any position.
Step 2: The n-th (n < p) dot is placed in any position such that a total of vertical and horizontal sums from an already arranged point can be 3 or more.
It is determined that the distance from the mark x surrounding the central dot shown in FIG. 11 is 2 or less, and no dot is arranged.
Step 3: The process in step 2 is repeated until n = p.
Step 4: The distance d (q, r) between the q-th dot and the r-th dot among p dots is calculated with the repeated process on the adjacent area taken into account. That is, by assuming the case in which a latent image pattern being generated also appears adjacently, the distance to the dot in the adjacent latent image pattern is obtained.

Step 4 includes the following step 4.1 to step 4.3.
Step 4.1: The distance between q and r in the dot pattern area is calculated.
When the coordinates of q are (Xq, Yq), and the coordinates of r are (Xr, Yr), the following equation holds.

$$d(q,r)=\sqrt{((Xq-Xr)^2+(Yq-Yr)^2)}$$

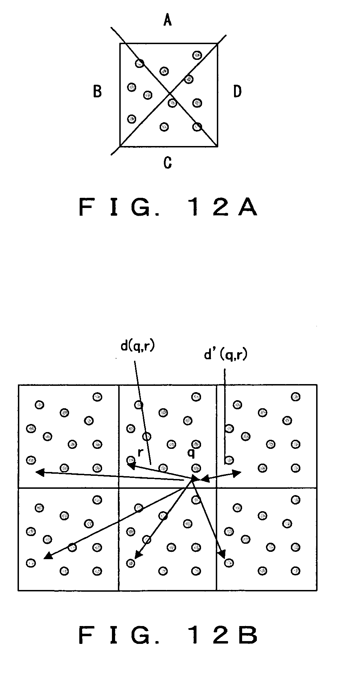

Step 4.2: In the areas (A, B, C, D: refer to FIG. 12A) obtained by dividing a dot pattern into four parts, when the area to which the point q belongs is C, the position of the point corresponding to the point r is obtained in the lower five adjacent areas, the point closest to q is defined as r', and the distance between q and r' is obtained (refer to FIG. 12B).
$d(q,r')=\sqrt{((Xq-Xr')^2+(Yq-Yr')^2)}$ where (Xr', Yr') are the coordinates of r'.
Step 4.3: The distance between q and r is whichever is smaller in step 4.1 or step 4.2
$d(q,r)=min(d(q,r), d(q,r'))$
Then, the following process is performed.
Step 5: Relating to the combination of all q and r in p dots, the distance min (d(q,r), d(q,r')) is calculated in the procedure in step 4.
Step 6: In the values of d (q, r) with respect to all combinations of q and r, all neighboring values (lower than predetermined threshold d0) are processed as targets to be moved. For example, two points s and t are exemplified.
Step 7: The repulsion fr is obtained for all selected s and t.
That is, assuming that the actual distance between the two points is d(s,t), and the threshold of a distance in step 6 is d0, the following equations hold.
$fr(d(s,t))=K((d0-d(s,t))/d(s,t))^2$ (K is a constant) (when d(s,t)≤d0)
$fr(d(s,t))=0$ (when d(s,t)>d0)
Step 8: In the combination of s and t, the value related to the highest repulsion is selected, and the s and t are moved into the direction in which the repulsion disappears (practically in the opposite directions simultaneously along the axis where s and t are located). When the threshold is exceeded and the repulsion disappears, the process stops.
Step 9: The procedures in steps 4 through 8 are repeated, and the repulsion disappears between all two points.

According to the algorithm above, the dot pattern of the latent image pattern is automatically designed.

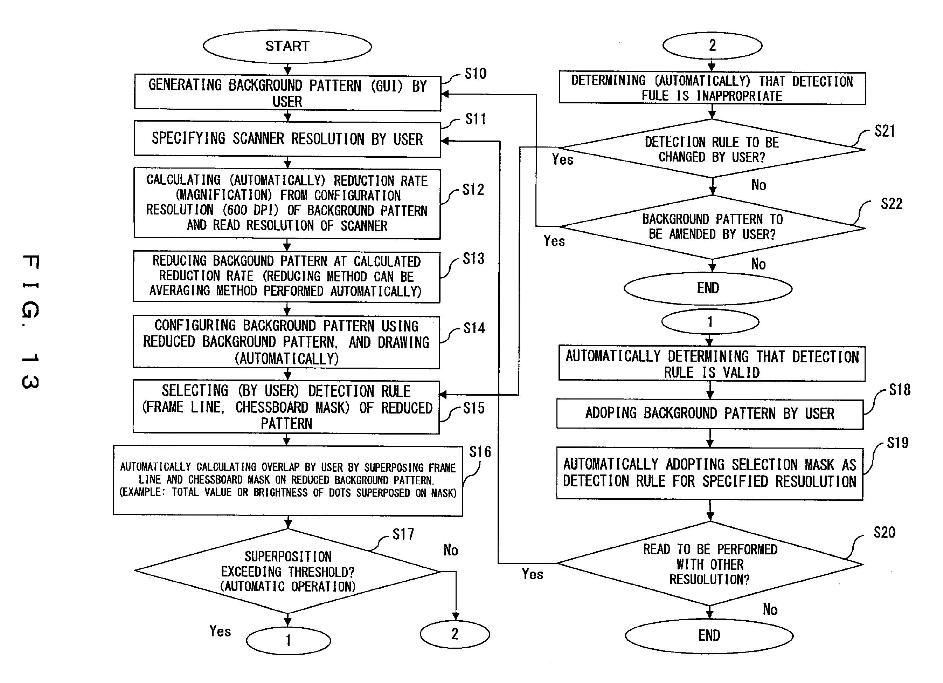

FIG. 13 shows the procedure of designing a dot pattern of a background pattern proposed according to the embodiment of the present invention.
First, in step 10, a user generates an optional background pattern using a GUI tool. In step S11, a user specifies the resolution of a scanner. In step S12, a reduction rate (magnification) is calculated from the configuration resolution (600 dpi according to the present embodiment) of the background pattern and the read resolution (300 dpi according to the present embodiment) of a scanner. The calculation can be automatically performed by a computer. In step S13, a background pattern is reduced at the calculated reduction rate. A reducing method can be an average method (FIG. 10C) etc., and the process is automatically performed by a computer. The reduced image is an estimated image of a change of a pattern. In step S14, using the reduced background pattern, a background pattern is configured to direct a computer to draw an image. In step S15, the user selects a rule (size of frame line, the type of chessboard mask, etc.) of detecting a reduced pattern. In step S16, the overlap state of the frame line and a chessboard mask is calculated by the user's superposing the frame line and the chessboard mask on the reduced background pattern. The process is performed by a computer calculating the sum of the brightness of the dots superposed on the mask. In step S17, it is determined whether or not the overlapping state (value of the sum) equals or exceeds the threshold value. If the determination in step S17 is YES, it is determined that the detection rule is valid. In step S18, when the detection rule is determined as valid, the user adopts the background pattern. In step S19, the selected mask is adopted as a detection rule for specified resolution. In step S20, it is determined whether or not there is the possibility that the background pattern can be read with other resolution. In step S20, when a reading is not be performed with other resolution, control is terminated. In step S20, when it is determined that a reading can be performed with other resolution, control is passed to step S11, and the subsequent steps are repeated. If the determination in step S17 is NO, and it is determined that the detection rule is not valid, then the user determines in step S21 whether or not the detection rule is to be changed. If it is determined in step S21 that the detection rule is to be changed, control is returned to step S15 to perform the process. If it is determined in step S21 that the detection rule is not to be changed, then the user determines in step S22 that the background pattern is to be amended. If it is determined in step S22 that the background pattern is not to be amended, then the process terminates. If it is determined in step S22 that the background pattern is to be amended, then control is returned to step S10, and a background pattern is generated again.

As described above, according to the embodiment of the present invention, when watermark information is embedded, multivalued bit information obtained by adding the redundancy to the bit value of watermark information is embedded using as a unit the background pattern in a length by width multiple size obtained by vertically and horizontally arranging background patterns corresponding to binary values. Thus, a background pattern watermark is embedded, the embedding area is reduced and the stability at the detection can be obtained. When watermark information is embedded in a background image, a background pattern for designation of an embedding area is used for the heading portion of a watermark embedded block. Thus, a starting position and an ending position of a watermark detection area can be correctly performed, thereby improving the detection accuracy.

With respect to a background pattern, it is assumed that a scanning operation is performed with low resolution when a watermark image is generated, and an appropriate watermark detection rule is generated in advance. The stability of detection can be attained by using a predicted image of a pattern change for a statistical pattern detection and template matching.

Relating to a latent image pattern, a uniform arrangement of isolated dots is determined while satisfying a condition of suppressing uneven color during both printing and copying. In this method, an appropriate latent image pattern is obtained for a background pattern, thereby improving the output quality of a background pattern watermark embedded document with a latent image.

**Claims**

1. A background pattern image generating method which assigns a background pattern by printing a dot pattern on a background area of a printed document, comprising the steps of:

   preparing at least two types of background patterns;
   associating a block of a plurality of coupled two types of background patterns with a binary or multivalued number representing information by combining the two types of background patterns; and
   generating a background pattern image by arranging a block associated with the binary or multivalued number according to the watermark information included in the background pattern.

2. The method according to claim 1, wherein a combination of the background patterns of the block is associated with the binary or multivalued number representing the information; and an error correction is performed by checking the association with the combination and the number.

3. The method according to claim 2, wherein the error correction is performed based on majority rule on the types of the background patterns included in the block.

4. The method according to claim 1, wherein an information area detection pattern different from at least two types of background patterns is added to a leading position of an array of the block according to the watermark information.

**5.** The method according to claim 1, wherein a latent image is embedded in a background pattern image formed by an array of at least two types of background patterns, by using a latent image pattern which dots are arranged under a predetermined restriction condition.

**6.** The method according to claim 5, wherein the arrangement under the restriction condition is a uniform arrangement.

**7.** The method according to claim 1, wherein the background pattern comprises:

a line formed by adjacent dots for detection of watermark information; and
isolated dots not to be copied during copying.

**8.** A background pattern as a basic unit of background patterns assigned to the background area of a document to be printed, comprising:

a line configured by adjacent dots for detection of watermark information embedded in the background; and
isolated dots not to be copied during copying.

**9.** The background pattern according to claim 8, wherein the line is a diagonal of the background pattern in which the center part of the line are lacked; and the isolated dots are arranged in a position symmetrical about the line and in the another diagonal direction different from the line.

**10.** The background pattern according to claim 9, wherein watermark information to be embedded in the background pattern is represented by combining two types of background patterns generated by making the diagonal directions in which the line is generated different.

**11.** A background pattern designing method configuring a background pattern in which watermark information is embedded for assignment to a background area of a printing document, comprising the steps of:

(a) converting a given background pattern into an image of different resolution than in printing process;
(b) applying a predetermined detection rule of a background pattern to the converted image;
(c) determining whether or not a background pattern can be detected as a result of applying the detection rule;
(d) changing the detection rule or changing a background pattern when the detection rule is applied and a background pattern cannot be detected; and
(e) determining an appropriate background pattern and a detection rule by repeating the steps (a) through (d).

**12.** A background pattern image generation apparatus which assigns a background pattern by printing a dot pattern on a background area of a printed document, comprising:

an input means for inputting two types of background patterns; and
a background pattern image generation means for associating a block of a plurality of coupled two types of background patterns with a binary or multivalued number representing information by combining the two types of background patterns, and arranging a block associated with the binary or multivalued number according to the watermark information included in the background pattern, thereby generating a background pattern image.

FIG. 1

F I G. 2 A

F I G. 2 B

F I G. 3

F I G. 4 A

F I G. 4 B

WHEN WATERMARK IS EMBEDDED

WHEN WATERMARK IS DETECTED

# F I G. 5

WHEN WATERMARK IS EMBEDDED

## F I G. 6 A

WHEN WATERMARK IS DETECTED

## F I G. 6 B

F I G. 7

BACKGROUND
PATTERN

BACKGROUND
PATTERN IN
DOUBLE SIZE

BACKGROUND PATTERN
IMAGE

(1)

(2)

(3)

LATENT IMAGE
PATTERN

COPY

BACKGROUND IMAGE
FOR PRINTING

DOCUMENT
DATA

(4)

DRAWING ON
PROVISIONAL
SCREEN

LATENT IMAGE
SCREEN

F I G.  8

F I G. 9

F I G.
10 A

F I G.
10 B

F I G.
10 C

F I G.
10 D

DISTANCE = 3

F I G.  1 1

F I G. 1 2 A

F I G. 1 2 B

F I G. 1 3

START

S10 — GENERATING BACKGROUND PATTERN (GUI) BY USER

S11 — SPECIFYING SCANNER RESOLUTION BY USER

S12 — CALCULATING (AUTOMATICALLY) REDUCTION RATE (MAGNIFICATION) FROM CONFIGURATION RESOLUTION (600 DPI) OF BACKGROUND PATTERN AND READ RESOLUTION OF SCANNER

S13 — REDUCING BACKGOUND PATTERN AT CALCULATED REDUCTION RATE (REDUCING METHOD CAN BE AVERAGING METHOD PERFORMED AUTOMATICALLY)

S14 — CONFIGURING BACKGROUND PATTERN USING REDUCED BACKGROUND PATTERN, AND DRAWING (AUTOMATICALLY)

S15 — SELECTING (BY USER) DETECTION RULE (FRAME LINE, CHESSBOARD MASK) OF REDUCED PATTERN

S16 — AUTOMATICALLY CALCULATING OVERLAP BY USER BY SUPERPOSING FRAME LINE AND CHESSBOARD MASK ON REDUCED BACKGROUND PATTERN. (EXAMPLE: TOTAL VALUE OR BRIGHTNESS OF DOTS SUPERPOSED ON MASK)

S17 — SUPERPOSITION EXCEEDING THRESHOLD? (AUTOMATIC OPERATION)

Yes → 1
No → 2

2 → DETERMINING (AUTOMATICALLY) THAT DETECTION RULE IS INAPPROPRIATE

S21 — DETECTION RULE TO BE CHANGED BY USER?

No / Yes

S22 — BACKGROUND PATTERN TO BE AMENDED BY USER?

No → END
Yes

1 → S18 — AUTOMATICALLY DETERMINING THAT DETECTION RULE IS VALID

S19 — ADOPING BACKGROUND PATTERN BY USER

AUTOMATICALLY ADOPTING SELECTION MASK AS DETECTION RULE FOR SPECIFIED RESUOLUTION

S20 — READ TO BE PERFORMED WITH OTHER RESUOLUTION?

Yes
No → END

## INTERNATIONAL SEARCH REPORT

| International application No. |
| --- |
| PCT/JP2005/019566 |

A.   CLASSIFICATION OF SUBJECT MATTER
*H04N1/387*(2006.01)

According to International Patent Classification (IPC) or to both national classification and IPC

B.   FIELDS SEARCHED

Minimum documentation searched (classification system followed by classification symbols)
*H04N1/387*(2006.01)

Documentation searched other than minimum documentation to the extent that such documents are included in the fields searched
Jitsuyo Shinan Koho        1922-1996   Jitsuyo Shinan Toroku Koho   1996-2005
Kokai Jitsuyo Shinan Koho   1971-2005   Toroku Jitsuyo Shinan Koho   1994-2005

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| X<br>Y | JP 2003-101762 A  (Oki Electric Industry Co., Ltd.),<br>04 April, 2003 (04.04.03),<br>Par. Nos. [0059] to [0109]<br>& US 2003/0021442 A1 | 1-3,5,6,12<br>4 |
| Y | JP 2003-283790 A  (Fuji Xerox Co., Ltd.),<br>03 October, 2003 (03.10.03),<br>Fig. 16<br>& US 2003/0179412 A1 | 4 |
| Y | JP 9-179494 A  (Kabushiki Kaisha Intekku),<br>11 July, 1997 (11.07.97),<br>Fig. 17<br>(Family: none) | 4 |

| ☒   Further documents are listed in the continuation of Box C. | ☐   See patent family annex. |
| --- | --- |

| * Special categories of cited documents: | "T"   later document published after the international filing date or priority date and not in conflict with the application but cited to understand the principle or theory underlying the invention |
| --- | --- |
| "A"   document defining the general state of the art which is not considered   to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search<br>15 December, 2005 (15.12.05) | Date of mailing of the international search report<br>27 December, 2005 (27.12.05) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.

PCT/JP2005/019566

C (Continuation).   DOCUMENTS CONSIDERED TO BE RELEVANT

| Category* | Citation of document, with indication, where appropriate, of the relevant passages | Relevant to claim No. |
|---|---|---|
| X | JP 2004-128845 A  (Oki Electric Industry Co., Ltd.),<br>22 April, 2004 (22.04.04),<br>Par. Nos. [0068] to [0097]<br>(Family: none) | 11 |
| A | JP 2001-346032 A  (Fuji Xerox Co., Ltd.),<br>14 December, 2001 (14.12.01),<br>Fig. 2<br>(Family: none) | 1-12 |
| A | JP 2004-112356 A  (Fuji Xerox Co., Ltd.),<br>08 April, 2004 (08.04.04),<br>Figs. 10 to 12<br>(Family: none) | 1-12 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001346032 A
- JP 2004223854 A
- JP 2003101762 A
- JP 3628312 B
- JP 2002305646 A
- JP 2003283790 A
- JP H7231384 B